# EUROPEAN PATENT SPECIFICATION

(11) **EP 0 905 153 B1**
(45) Date of publication and mention of the grant of the patent: **31.03.2004**
(21) Application number: 98118192.8
(22) Date of filing: 25.09.1998
(51) Int. Cl.: C08F 210/16, C08F 2/00, C08F 297/08

(54) **Production of polyethylene having a broad molecular weight distribution**
Herstellung von Polyäthylen mit einer breiten Molekulargewichtsverteilung
Production de polyéthylène ayant une large distribution de poids moléculaire

(30) Priority: 27.09.1997 EP 97202971
(43) Date of publication of application: 31.03.1999
(73) Proprietor: ATOFINA Research, 7181 Seneffe (Feluy) (BE)
(72) Inventor: Debras, Guy, 6210 Frasnes-les-Gosselies (BE); Messiaen, Michel, 1410 Waterloo (BE)

(56) References cited:
- EP-A- 0 288 226
- WO-A-96/02583
- US-A- 5 276 115

## Description

The present invention relates to a process for the production of polyethylene in particular high density polyethylene (HDPE) having a bimodal molecular weight distribution.

For polyethylene, and for high density polyethylene (HDPE) in particular, the molecular weight distribution (MWD) is a fundamental property which determines the properties of the polymer, and thus its applications. It is generally recognised in the art that the molecular weight distribution of a polyethylene resin can principally determine the physical, and in particular the mechanical, properties of the resin and that the provision of different molecular weight polyethylene molecules can significantly affect the rheological properties of the polyethylene as a whole.

Since an increase in the molecular weight normally improves the physical properties of polyethylene resins, there is a strong demand for polyethylene having high molecular weight. However, it is the high molecular weight molecules which render the polymers more difficult to process. On the other hand, a broadening in the molecular weight distribution tends to improve the flow of the polymer when it is being processed at high rates of shear. Accordingly, in applications requiring a rapid transformation employing quite high inflation of the material through a die, for example in blowing and extrusion techniques, the broadening of the molecular weight distribution permits an improvement in the processing of polyethylene at high molecular weight (this being equivalent to a low melt index, as is known in the art). It is known that when the polyethylene has a high molecular weight and also a wide molecular weight distribution, the processing of the polyethylene is made easier as a result of the low molecular weight portion and also the high molecular weight portion contributes to a good impact resistance for the polyethylene film. A polyethylene of this type may be processed utilising less energy with higher processing yields.

The molecular weight distribution can be completely defined by means of a curve obtained by gel permeation chromatography. Generally, the molecular weight distribution is defined by a parameter, known as the dispersion index D, which is the ratio between the average molecular weight by weight (Mw) and the average molecular weight by number (Mn). The dispersion index constitutes a measure of the width of the molecular weight distribution. For most applications, the dispersion index varies between 10 and 30.

It is known in the art that it is not possible to prepare a polyethylene having a broad molecular weight distribution and the required properties simply by mixing polyethylenes having different molecular weights.

As discussed above, high density polyethylene consists of high and low molecular weight fractions. The high molecular weight fraction provides good mechanical properties to the high density polyethylene and the low molecular weight fraction is required to give good processability to the high density polyethylene, the high molecular weight fraction having relatively high viscosity which can lead to difficulties in processing such a high molecular weight fraction. In a bimodal high density polyethylene, the mixture of the high and low melting weight fractions is adjusted as compared to a monomodal distribution so as to increase the proportion of high molecular weight species in the polymer. This can provide improved mechanical properties.

It is accordingly recognised in the art that it is desirable to have a bimodal distribution of molecular weight in the high density polyethylene. For a bimodal distribution a graph of the molecular weight distribution as determined for example by gel permeation chromatography, may for example include in the curve a "shoulder" on the high molecular weight side of the peak of the molecular weight distribution.

The manufacture of bimodal polyethylene is known in the art. It is known in the art that in order to achieve a bimodal distribution, which reflects the production of two polymer fractions, having different molecular weights, two catalysts are required which provide two different catalytic properties and establish two different active sites. Those two sites in turn catalyse two reactions for the production of the two polymers to enable the bimodal distribution to be achieved. Currently, as has been known for many years, as exemplified by EP-A-0057420, the commercial production of bimodal high density polyethylene is carried out by a two step process, using two reactors in series. In the two step process, the process conditions and the catalyst can be optimised in order to provide a high efficiency and yield for each step in the overall process.

In the applicant's earlier WO-A-95/10548 and WO-A-95/11930, it was proposed to use a Ziegler-Natta catalyst to produce polyethylene having a bimodal molecular weight distribution in a two stage polymerisation process in two liquid full loop reactors in series. In the polymerisation process, the comonomer is fed into the first reactor and the high and low molecular weight polymers are produced in the first and second reactors respectively. The introduction of comonomer into the first reactor leads to the incorporation of the comonomer into the polymer chains in turn leading to the relatively high molecular weight fraction being formed in the first reactor. In contrast, no comonomer is deliberately introduced into the second reactor and instead a higher concentration of hydrogen is present in the second reactor to enable the low molecular weight fraction to be formed therein.

These prior processes suffer from the technical disadvantage that some unreacted comonomer can pass through from the first reactor to the second reactor thereby to react with the ethylene monomer therein leading to an increase in the molecular weight of the fraction produced in the second reactor. This in turn can deteriorate the bimodality of the molecular weight distribution of the combined high and low molecular weight polymers leading to a reduction in mechanical properties.

US 5,276,115 discloses a process comprising contacting at least one mono-1-olefin, a catalyst comprising a transition metal and hydrogen in a first reactor to produce a low molecular weight polymer. The low molecular weight polymer from the first reactor, monomer, comonomer, catalyst and cyclopentadienyl compound are further introduced in a second reactor.

The present invention aims to provide a process for producing polyethylene having a large molecular weight distribution, and in particular a bimodal molecular weight distribution, which overcomes or at least mitigates some of the problems in the prior art discussed above.

Accordingly, the present invention provides a process for producing high density polyethylene in the presence of a Ziegler-Natta catalyst system in two liquid full loop reactors in series, wherein in a first reactor a first polyethylene product is polymerised substantially by homopolymerisation of ethylene and hydrogen, optionally with a minor degree of copolymerisation of ethylene with an alpha-olefinic comonomer comprising from 3 to 8 carbon atoms, and in a second reactor serially connected to the first reactor downstream thereof a second polyethylene product is copolymerised from ethylene and an alpha-olefinic comonomer comprising from 3 to 8 carbon atoms, and a hydrogenation catalyst is introduced into the reactants downstream of the first reactor.

Preferably, the hydrogenation catalyst is introduced into the process stream passing from the first reactor to the second reactor.

The degree of copolymerisation in the first reactor is limited to an amount whereby the first polyethylene product has a density of not less than 0.960g/cm³.

The present invention is predicated on the surprising discovery by the present inventor that the production of, respectively, low and high molecular weight fractions of a polyethylene in first and second reactors of two liquid full loop reactors in series can unexpectedly yield high density polyethylene having a bimodal molecular weight distribution with improved mechanical properties.

Without being bound by theory, it is believed that this unexpected technical effect results from the absence, or presence in only minor amounts, of comonomer in the first reactor, leading to reliable polymerisation of the low molecular weight polyethylene fraction therein, and the addition of substantial comonomer to the second reactor in conjunction with the consumption of hydrogen prior to or entering the second reactor to form ethane as a result of the addition of the hydrogenation catalyst, leads to reliable copolymerisation of the high molecular weight polyethylene fraction having good mechanical properties.

In the preferred process of the present invention, the homopolymerisation and copolymerisation processes are carried out in the liquid phase in an inert diluent, the reactants comprising ethylene and hydrogen for homopolymerisation and for copolymerisation ethylene and an alpha-olefinic comonomer comprising from 3 to 8 carbon atoms. The comonomer may be selected from 1-butene, 1-pentene, 1-hexene, 4-methyl 1-pentene, 1-heptene and 1-octene. The inert diluent may comprise isobutane.

The homopolymerisation and copolymerisation processes are preferably carried out at a temperature of from 50 to 120°C, more preferably from 60 to 110°C, under an absolute pressure of 1 to 100 bar. Typically, the homopolymerisation in the first reactor is carried out at a higher temperature than the copolymerisation in the second reactor.

In the first reactor, the ethylene monomer preferably comprises from 0.1 to 3% by weight based on the total weight of the ethylene monomer in the inert diluent and the hydrogen comprises from 0.1 to 2 mol% on the same basis. A particularly preferred composition in the first reactor comprises 1% by weight ethylene and 0.8 mol% hydrogen. If a minor degree of copolymerisation is also carried out in the first reactor, an alpha-olefinic comonomer as described above is also introduced into the first reactor. The proportion of comonomer introduced is limited to an amount whereby the density of the polyethylene produced in the first reactor is at least 0.96g/cm³. The polymerisation product from the first reactor preferably has a melt index MI2 of from 5 to 200g/10min, more preferably from 25 to 100g/10min, the melt index MI2 being measured determined using the procedures of ASTM D1238 using a load of 2.16kg at a temperature of 190°C. The melt index MI2 is broadly inversely indicative of the molecular weight of the polymer. In other words, a low melt index is indicative of a high molecular weight for the polyethylene and vice versa. Typically, the polyethylene produced in the first reactor has a density of over 0.96g/cm³, more typically around 0.97g/cm³. Preferably, the low molecular weight polyethylene fraction produced in the first reactor comprises from 30 to 70% by weight, more typically around 50% by weight, of the total polyethylene produced in the first and second serially connected reactors.

In the second reactor, the comonomer as described above is introduced in substantial amounts, as compared to the first reactor, into the second reactor and in addition a hydrogenation catalyst, having a low activity with respect to the polymerisation of polyethylene, is introduced downstream of the first reactor, preferably into the process stream passing from the first reactor to the second reactor. The hydrogenation catalyst acts to consume hydrogen gas in that process stream thereby to form ethane, thereby in turn to reduce the hydrogen concentration in the second reactor, preferably substantially to zero. Accordingly, in the copolymerisation process carried out in the second reactor, the comonomer, which is typically 1-hexene, is reacted with the ethylene monomer to form a high molecular weight polyethylene fraction in the second reactor in a controllable manner.

Preferably, the temperature in the second reactor is lower than that in the first reactor, for example the temperature is 75°C in the second reactor as opposed to 100°C in the first reactor. The ethylene monomer preferably comprises from 0.1 to 2% by weight, typically around 0.8% by weight, and the comonomer comprises from 1 to 3% by weight, typically around 2% by weight, each based on the total weight of the monomer and comonomer in the inert diluent.

The hydrogenation catalyst preferably comprises a metallocene catalyst of general formula:

Cp₂MXₙ

where
Cp is a substituted or unsubstituted cyclopentadienyl group; M is a transition metal from Group IVB of the Periodic Table or vanadium; X is a halogen or a hydrocarbyl group having from 1 to 10 carbon atoms; and n is the valency of the metal M minus 2.

A particularly preferred metallocene catalyst comprises Cp₂TiCl₂.

The metallocene catalyst is injected into the process stream in a preferred amount of from 2 to 50ppm by weight, more preferably from 2 to 20ppm based on the weight of the inert diluent.

The final polyethylene, comprising in admixture the low molecular weight polyethylene fraction produced in the first reactor and conveyed through the second reactor and the high molecular weight polyethylene fraction produced in the second reactor, preferably has a high load melt index (HLMI), determined using the procedures of ASTM D1238 using a load of 21.6kg at a temperature of 190°C, of from 5 to 40g/10min, more preferably from 10 to 15g/10min. The melt index MI2 of the final product may range from 0.05 to 1.0g/10min, preferably from 0.1 to 0.5g/10min. Preferably, the final product has a shear response (SR2), this being a ratio between the HLMI and the MI2 values and representative of the processability of the polyethylene resins produced in accordance with the process of the invention, of from 50 to 180, more preferably from 60 to 130. Preferably, the final product has a density of from 0.935 to 0.955g/cm³, more preferably from 0.940 to 0.950g/cm³. The final product may have a molecular weight distribution MWD (the ratio of M_{w}/Mₙ) of from 10 to 20.

It has been found that the process of the present invention can yield bimodal high density polyethylenes having properties which make them particularly suitable for use as polyethylene resins for the manufacture of pipes. Since no comonomer is incorporated into the low molecular weight fraction, even if the polymer as a whole has the same molecular weight distribution as in a known polymer the resultant polymer can have improved mechanical properties. Thus the clear distinction in the production of the low and high molecular weight fractions in the process of the invention gives improved bimodality of the molecular weight distribution which in turn improves the mechanical properties such as the impact resistance of the polyethylene resin when used for pipes.

The Ziegler-Natta catalyst preferably consists of a transition metal component (compound A) which is the reaction product of an organomagnesium compound with a titanium compound and an organoaluminium component (compound B).

As transition metal compounds suitable for the preparation of component A, there are used tetravalent halogenated titanium compounds, preferably titanium compounds of the general formula TiXₙ(OR)₄₋ₙ in which n is 1 to 4, X stands for chlorine or bromine, and R for identical or different hydrocarbon radicals, especially straight-chain or branched alkyl groups having 1 to 18, preferably 1 to 10, carbon atoms.

Examples thereof are:
TiCl₄, Ti(OC₂H₅)₂Cl₂, Ti (OC₂H₅)₃Cl, Ti(OC₃H₇)₂Cl₂, Ti(OC₃H₇)₃Cl, Ti (OiC₃H₇)₂Cl₂, Ti (OiC₃H₇)₃Cl, Ti(OiC₄H₉)₂Cl₂, Ti(OiC₄H₉)₃Cl

In some cases, it may be advantageous to prepare the halogeno-ortho-titanic acid esters of the above formula in situ by reacting the respective ortho-titanic acid ester with TiCl₄ in a corresponding proportion.

This reaction is advantageously carried out at temperatures of from 0 to 200°C, the upper temperature limit being determined by the decomposition temperature of the tetravalent halogenated titanium compound used; it is advantageously carried out at temperatures of from 60 to 120°C.

The reaction may be effected in inert diluents, for example aliphatic or cycloaliphatic hydrocarbons as are currently used for the low pressure process such as butane, pentane, hexane, heptane, cyclohexane, methyl-cyclohexane as well as aromatic hydrocarbons, such as benzene or toluene; hydrogenated Diesel oil fractions which have been carefully freed from oxygen, sulphur compounds and moisture are also useful.

Subsequently, the reaction product of magnesium alcoholate and tetravalent halogenated titanium compound which is insoluble in hydrocarbons is freed from unreacted titanium compound by washing it several times with one of the above inert diluents in which the titanium-(IV)-compound used is readily soluble.

For preparing component A, magnesium alcoholates, preferably those of the general formula Mg(OR)₂ are used, in which R stands for identical or different hydrocarbon radicals, preferably straight-chain or branched alkyl groups having 1 to 10 carbon atoms; magnesium alcoholates having alkyl groups from 1 to 4 carbon atoms are preferred. Examples thereof are Mg(OCH₃)₂, Mg(OC₂H₅)₂, Mg(OC₃H₇)₂, Mg(OiC₃H₇)₂, Mg(OC₄H₉)₂, Mg(OiC₄H₉)₂, Mg(OCH₂-CH₂-C₆H₅)₂.

The magnesium alcoholates can be prepared by known methods, for example by reacting magnesium with alcohols, especially monohydric aliphatic alcohols.

Magnesium alcoholates of the general formula X-Mg-OR in which X stands for halogen, (SO₄)_{½} carboxylate, especially acetate of OH, and R has the above remaining, may also be used.

These compounds are, for example, obtained by reacting alcoholic solutions of the corresponding anhydrous acids with magnesium.

The titanium contents of component A may be within the range of from 0.05 to 10mg.-atom, per gram of component A. It can be controlled by the reaction time, the reaction temperature and the concentration of the tetravalent halogenated titanium compound used.

The concentration of the titanium component fixed on the magnesium compound is advantageously in the range of from 0.005 to 1.5mmol, preferably from 0.03 to 0.8mmol, per litre of dispersing agent or reactor volume. Generally, even higher concentrations are possible.

The organo-aluminium compounds used may be reaction products of aluminium-trialkyl or aluminium -dialkyl hydrides with hydrocarbon radicals having 1 to 16 carbon atoms, preferably Al(iBu)₃ or Al(iBu)₂H and diolefins containing 4 to 20 carbon atoms, preferably isoprene; for example aluminium isoprenyl.

Furthermore, suitable as component B are chlorinated organo-aluminium compounds, for example dialkyl-aluminium monochlorides of the formula R₂AlCl or alkyl-aluminium sesquichlorides of the formula R₃Al₂Cl₃, in which formulae R stands for identical or different hydrocarbon radicals, preferably alkyl groups having 1 to 16 carbon atoms, preferably 2 to 12 carbon atoms, for example (C₂H₅)₂AlCl, (iC₄H₉)₂AlCl, or (C₂H₅)₃Al₂Cl₃.

It is advantageous to use, as component B, aluminium-trialkyls of the formula AlR₃ or aluminium-dialkyl hydrides of the formula AlR₂H, in which formulae R stands for identical or different hydrocarbons, preferably alkyl groups having 1 to 16, preferably 2 to 6, carbon atoms, for example Al(C₂H₅)₃, Al(C₂H₅)₂H, Al(C₃H₇)₃, Al(C₃H₇)₂H, Al(iC₄H₉)₃, or Al(iC₄H₉)₂H.

The organoaluminium may be used in a concentration of from 0.5 to 10mmol per litre of reactor volume.

Optionally, a cocatalyst such as a triethylaluminium (TEAL) is employed in the first reactor, for example in an amount of around 250ppm by weight based on the weight of the inert diluent.

The process of the invention will now be described in greater detail with reference to the following Example.

### EXAMPLE 1

The process of the present invention was carried out in two serially connected liquid full loop reactors. In the first reactor, ethylene was polymerised with hydrogen in the presence of isobutane as a inert diluent and the amounts of the ethylene, hydrogen and isobutane are specified in Table 1. No comonomer was present. The catalyst comprised a magnesium dichloride-supported titanium Ziegler-Natta type catalyst including 6.5 wt% Ti, 13.8 wt% Mg and 51.4 wt% Cl, together with a cocatalyst of TEAL in the amount specified in Table 1.

The properties of the polyethylene resin produced by reactor 1 were analysed and it may be seen from Table 1 that the polyethylene resin had a melt index MI2 of 62g/10min, this representing a relatively low molecular weight for the polymer, yet a relatively high density of greater than 0.970g/cm³. Reactor 1 produced 50% by weight of the total amount of the final polyethylene resin product produced by both reactor 1 and reactor 2.

The polymerisation was carried out at a temperature of 100°C and at a pressure of 42 bar.

Thereafter, the process stream, including the polyethylene resin produced in the first reactor and the catalyst, was conveyed to the second reactor which was operated under polymerisation conditions having a lower temperature, of 75°C, than that employed in the first reactor and a pressure of 42 bar. Prior to entry into the second reactor, a metallocene catalyst, in particular Cp₂TiCl₂, was introduced into the process stream in the amount specified in Table 2. It may be seen from Table 1 that this addition of the metallocene catalyst caused hydrogenation of the ethylene by the hydrogen content in the process stream thereby to form ethane, whereby in the second reactor there was no hydrogen remaining. A comonomer in the form of 1-hexene was introduced into the second reactor in the amount specified in Table 1.

The polymerisation process in the second reactor produced a relatively high molecular weight polyethylene fraction. In Table 1 the properties of the final product are specified. It may be seen that the melt index of the final product is decreased as compared to the product produced in the first reactor showing the formation of a high molecular weight fraction in the second reactor.

The polyethylene resin was then formed into a pipe having a diameter of 63mm which was then subjected to a notched pressure test in accordance with EN33479 in which the pipe was internally pressurised to a pressure of 4.6MPa at a temperature of 80°C. The pipe survived this notched pressure test for a period of greater than 1600 hours prior to failing. This shows good mechanical properties for the pipe resin.

### COMPARATIVE EXAMPLES 1 AND 2

In the Comparative Examples, in contrast to the process of the invention, the high molecular weight fraction was formed in the first reactor by introducing into the first reactor 1-hexene and ethylene monomer in the amounts specified in Table 1, and with substantial absence of hydrogen in the first reactor. This yielded a relatively high molecular weight polyethylene fraction from the first reactor, for Comparative Example 1 the polyethylene having an HLMI of 0.33g/10min and the density of 0.926g/cm³ and for Comparative Example 2 the polyethylene having an HLMI of around 0.22g/10min and a density also of 0.926g/cm³. Thereafter the process stream was conveyed to the second reactor in which no hydrogenation catalyst or additional comonomer was added and the hydrogen content was substantially increased thereby to form in the second reactor a low molecular weight polyethylene fraction substantially by homopolymerisation of ethylene.

As may be seen from Table 1, the properties in terms of the HLMI and the density of the final polyethylene resins of Comparative Examples 1 and 2 are substantially similar to the corresponding HLMI and density values for the final polyethylene resin of Example 1. The molecular weight distribution of the polyethylene resin produced in accordance with Comparative Examples 1 and 2 is significantly broader than that of the polyethylene resin produced in accordance with Example 1. However, as may be seen from the properties of a pipe in the notched pressure test, when the polyethylene resins of the Comparative Examples were subjected to the same notched pressure test as that of the resin of Example 1, for Comparative Example 1 the polyethylene resin pipe failed with a ductile failure after only 48 or 66 hours and the polyethylene resin of Comparative Example 2 failed the notch test after a period of only 381 hours by a brittle failure. Each of these notch test results for Comparative Examples 1 and 2 is significantly worse than the result for Example 1. This demonstrates the clearly improved mechanical properties of the polyethylene resin produced in accordance with the process of the invention. Such a technical improvement in these mechanical properties could not have been predicted from the prior art two-step polymerisation processes for the use of bimodal HDPE resins as discussed hereinabove.

### EXAMPLES 2 TO 5

Examples 2 to 5 were carried out which comprised modifications of the process of Example 1, primarily in the use of triisobutyl aluminium (TIBAL) instead of TEAL in the polymerisation process and, in Example 5, the use of a minor degree of copolymerisation in the first reactor, as opposed to exclusive homopolymerisation in the first reactor as in Examples 1 to 4. For each of Examples 2 to 5, the operating conditions, the properties of the polyethylene produced in the first reactor and the properties of the final product are specified.

It may be seen that Examples 2 to 5 produced polyethylene having HLMI values lower than that of Example 1 but a similar density and a slightly higher molecular weight distribution. The shear response of the products of Examples 2 to 5 is higher than that of Example 1, indicating improved processability of those polymers. The use of a minor degree of copolymerisation in Example 5 leads to density of the polyethylene produced in the first reactor of 0.965cm³/g, which is lower than for the other Examples. The degree of copolymerisation in the first reactor is limited so that the density of the copolymerised polyethylene is not less than 0.96cm³/g, otherwise the essential distinction between the low molecular weight portion produced in the first reactor and the high molecular weight portion made in the second reactor is reduced, thereby reducing the bimodality of the final polymer.

**TABLE 1**

| | **Examples** | | | | | Comparative Examples | |
|---|---|---|---|---|---|---|---|
| | 1 | 2 | 3 | 4 | 5 | 1 | 2 |
| Reactor 1 | | | | | | | |
| | | | | | | | |
| Temp (°C) | 100 | 100 | 100 | 100 | 100 | 75 | 75 |
| TEAL (ppm) | 250 | 0 | 0 | 0 | 0 | 200 | 250 |
| TIBAL (ppm) | 0 | 330 | 340 | 400 | 405 | 0 | 0 |
| C₂(kg/h) | 3.5 | 3.5 | 3.5 | 3.6 | 3.6 | 3.7 | 3.4 |
| C₄(cm³/h) | 0 | 0 | 0 | 0 | 66 | 991 | 700 |
| H₂(Nl/h) | 50 | 60 | 70 | 100 | 100 | 0.1 | 0.1 |
| iC₄(kg/h) | 30 | 26 | 26 | 26 | 26 | 30 | 30 |
| | | | | | | | |
| Off gas | | | | | | | |
| C₂(wt%) | 0.39 | 0.99 | 1.01 | 1.63 | 1.27 | 0.44 | 0.38 |
| C₆(wt%) | 0 | 0 | 0 | 0 | 0.13 | 1.59 | 1.2 |
| | | | | | | | |
| Fluff Reactor 1 | | | | | | | |
| | | | | | | | |
| Ml₂(g/10') | 62 | 27 | 52 | 60 | 63 | - | - |
| HLMI(g/10') | - | - | - | - | - | 0.33 | 0.22 |
| Density(g/cm³) | >.970 | 0.968 | 0.968 | 0.968 | 0.965 | 0.926 | 0.926 |
| | | | | | | | |
| % Reactor 1 | 50 | 48 | 48 | 50 | 50 | 49 | 48 |
| | | | | | | | |
| Reactor 2 | | | | | | | |
| | | | | | | | |
| Temp(°C) | 75 | 80 | 80 | 80 | 80 | 95 | 95 |
| Cp₂TiCl₂(ppm) | 6 | 17 | 20 | 42 | 43 | - | - |
| C₂(kg/h) | 3.8 | 3.5 | 3.5 | 3.2 | 3.2 | 4.0 | 4.2 |
| C₆(cm³/h) | 1622 | 1696 | 1753 | 2486 | 2619 | 0 | 0 |
| H₂(Nl/h) | 0 | 0 | 0 | 0 | 0 | 253 | 376 |
| iC₄(kg/h) | 7 | 11 | 11 | 11 | 11 | 7 | 7 |
| | | | | | | | |
| Off gas | | | | | | | |
| C₂(wt%) | 0.56 | 0.82 | 0.75 | 1.12 | 0.87 | 1.1 | 1.9 |
| C₆(wt%) | 1.7 | 2.46 | 2.38 | 3.56 | 3.51 | 0.59 | 0.67 |
| H₂(mol%) | 0.006 | 0.001 | 0.004 | 0.001 | 0 | 1.2 | 2.3 |
| | | | | | | | |
| Final Product | | | | | | | |
| HLMI | 19.6 | 10.6 | 14.0 | 13.5 | 12.7 | 20.5 | 18.7 |
| Ml₂ | 0.24 | 0.10 | 0.15 | 0.13 | 0.10 | 0.11 | 0.08 |
| SR2 | 82 | 106 | 93 | 104 | 127 | 186 | 238 |
| Density(g/cm³) | 0.947 | 0.947 | 0.948 | 0.947 | 0.945 | 0.945 | 0.949 |
| | | | | | | | |
| Mn(kDA) | 15.8 | 17.9 | 17.3 | 16.5 | 17 | 9.4 | 10.4 |
| Mw(kDA) | 212 | 271 | 244 | 247 | 279 | 265 | 306 |
| Mz(kDA) | 1440 | 1843 | 1623 | 1537 | 2059 | 2126 | 2589 |
| MWD | 13.1 | 15.2 | 14.1 | 15.0 | 16.4 | 28.2 | 29.4 |
| | | | | | | | |
| Pipe Properties | | | | | | | |
| 0 63mm/4.6MPa/80°C+notched | | | | | | | |
| Time for failure (hrs) | >1600 | - | - | - | - | 48 | 381 |
| | | | | | | 66 | |

## Claims

1. A process for producing high density polyethylene in the presence of a Ziegler-Natta catalyst system in two liquid full loop reactors in series, wherein in a first reactor a first polyethylene product is polymerised substantially by homopolymerisation of ethylene and hydrogen, optionally with a minor degree of copolymerisation of ethylene with an alpha-olefinic comonomer comprising from 3 to 8 carbon atoms wherein the degree of copolymerisation in the first reactor is limited to an amount whereby the first polyethylene product has a density of not less than 0.960g/cm³, and in a second reactor serially connected to the first reactor downstream thereof a second polyethylene product is copolymerised from ethylene and an alpha-olefinic comonomer comprising from 3 to 8 carbon atoms, and a hydrogenation catalyst is introduced into the reactants downstream of the first reactor.

2. A process according to claim 1 wherein the hydrogenation catalyst is introduced into the process stream passing from the first reactor to the second reactor.

3. A process according to claim 1 or claim 2 wherein the hydrogenation catalyst comprises a metallocene catalyst of general formula:
Cp₂MXₙ
where
Cp is a substituted or unsubstituted cyclopentadienyl group; M is a transition metal from Group IVB of the Periodic Table or vanadium; X is a halogen or a hydrocarbyl group having from 1 to 10 carbon atoms; and n is the valency of the metal M minus 2.

4. A process according to claim 3 wherein the metallocene catalyst comprises Cp₂TiCl₂ wherein Cp is a substituted or unsubstituted cyclopentadienyl group.

5. A process according to any foregoing claim wherein the comonomer comprises 1-hexene.

6. A process according to any foregoing claim wherein the homopolymerisation and copolymerisation processes are carried out at a temperature of from 60 to 110°C, under an absolute pressure of 1 to 100 bar, and the homopolymerisation in the first reactor is carried out at a higher temperature than the copolymerisation in the second reactor.

7. A process according to any foregoing claim wherein in the first reactor, the ethylene monomer preferably comprises from 0.1 to 3% by weight based on the total weight of the ethylene monomer in an inert diluent and the hydrogen comprises from 0.1 to 2 mol% on the same basis.

8. A process according to any foregoing claim wherein the low molecular weight polyethylene fraction produced in the first reactor comprises from 30 to 70% by weight of the total polyethylene produced in the first and second serially connected reactors.

9. A process according to any foregoing claim wherein in the second reactor the ethylene monomer comprises from 0.1 to 2% by weight, and the comonomer comprises from 1 to 3% by weight, each based on the total weight of the monomer and comonomer in an inert diluent.

## Patentansprüche

1. Verfahren zum Herstellen von Hochdichtepolyethylen in der Anwesenheit eines Ziegler-Natta Katalysatorsystems in zwei Flüssigkeitsvollschlaufenreaktoren in Serie, wobei in einem ersten Reaktor ein erstes Polyethylenprodukt im wesentlichen polymerisiert wird durch Homopolymerisation von Ethylen und Wasserstoff, wahlfrei mit einem geringeren Copolymerisationsgrad von Ethylen mit einem alpha-olefinischen Comonomer, umfassend 3 bis 8 Kohlenstoffatome, wobei der Copolymerisationsgrad in dem ersten Reaktor auf eine Menge begrenzt ist, wodurch das erste Polyethylenprodukt eine Dichte von nicht weniger als 0,960 g/cm³ hat, und in einem zweiten Reaktor, serienmäßig mit dem ersten Reaktor stromabwärts davon verbunden, wird ein zweites Polyethylenprodukt copolymerisiert aus Ethylen und einem alpha-olefinischen Comonomeren, umfassend 3 bis 8 Kohlenstoffatome, und ein Hydrierungskatalysator wird in die Reaktanten stromabwärts des ersten Reaktors eingeführt.

2. Verfahren nach Anspruch 1, wobei der Hydrierungskatalysator in den Verfahrensstrom eingeführt wird, der von dem ersten Reaktor zu dem zweiten Reaktor geht.

3. Verfahren nach Anspruch 1 oder Anspruch 2, wobei der Hydrierungskatalysator einen Metallocenkatalysator der allgemeinen Formel:
Cp₂MXₙ
umfaßt, wobei Cp eine substituierte oder unsubstituierte Cyclopentadienylgruppe ist, M ist ein Übergangsmetall aus Gruppe IVB des Periodensystems oder Vanadium, X ist ein Halogen oder eine Hydrocarbylgruppe mit 1 bis 10 Kohlenstoffatomen, und n ist die Wertigkeit des Metalls M minus 2.

4. Verfahren nach Anspruch 3, wobei der Metallocenkatalysator Cp₂TiCl₂ umfaßt, wobei Cp eine substituierte oder unsubstituierte Cyclopentadienylgruppe ist.

5. Verfahren nach einem vorhergehenden Anspruch, wobei das Comonomer 1-Hexen umfaßt.

6. Verfahren nach einem vorhergehenden Anspruch, wobei die Homopolymerisations- und Copolymerisationsverfahren bei einer Temperatur von 60 bis 110°C unter einem absoluten Druck von 1 bis 100 Bar durchgeführt werden, und die Homopolymerisation in dem ersten Reaktor wird bei einer höheren Temperatur als die Copolymerisation in dem zweiten Reaktor durchgeführt.

7. Verfahren nach einem vorhergehenden Anspruch, wobei in dem ersten Reaktor das Ethylenmonomer vorzugsweise 0,1 bis 3 Gew.%, basierend auf dem Gesamtgewicht des Ethylenmonomeren in einem inerten Verdünnungsmittel, umfaßt, und der Wasserstoff umfaßt 0,1 bis 2 Molprozent auf der gleichen Basis.

8. Verfahren nach einem vorhergehenden Anspruch, wobei die niedrigmolekulargewichtige Polyethylenfraktion, hergestellt in dem ersten Reaktor, 30 bis 70 Gew.% des gesamten Polyethylens, hergestellt in den ersten und zweiten serienmäßig verbundenen Reaktoren, umfaßt.

9. Verfahren nach einem vorhergehenden Anspruch, wobei in dem zweiten Reaktor das Ethylenmonomer 0,1 bis 2 Gew.% umfaßt, und das Comonomer umfaßt 1 bis 3 Gew.%, jeweils basierend auf dem Gesamtgewicht des Monomeren und Comonomeren in einem inerten Verdünnungsmittel.

## Revendications

1. Procédé pour produire du polyéthylène haute densité en présence d'un système de catalyseur de Ziegler-Natta dans deux réacteurs à boucles disposés en série remplis de liquide, où dans un premier réacteur un premier produit de polyéthylène est polymérisé sensiblement par homopolymérisation de l'éthylène et de l'hydrogène, facultativement avec un degré minime de copolymérisation de l'éthylène avec un co-monomère alphabétiquement comprenant de 3 à 8 atomes de carbone où le degré de copolymérisation dans le premier réacteur est limité jusqu'à une quantité telle que le premier produit de polyéthylène a une densité ne dépassant pas 0,960 g/cm³, et dans un second réacteur raccordé en série au premier réacteur en aval de celui-ci, un second produit de polyéthylène est co-polymérisé à partir de l'éthylène et d'un co-monomère alpha-oléfinique comprenant de 3 à 8 atomes de carbone, et un catalyseur d'hydrogénation est introduit dans les réactifs en aval du premier réacteur.

2. Procédé selon la revendication 1 où le catalyseur d'hydrogénation est introduit dans le courant du procédé passant entre le premier réacteur et le second réacteur.

3. Procédé selon la revendication 1 ou la revendication 2 où le catalyseur d'hydrogénation comprend un catalyseur de métallocène de la formule générale:
Cp₂MXₙ
où
Cp est un groupe cyclopentadiényle substitué ou non substitué; M est un métal de transition du groupe IVB du Tableau Périodique ou du vanadium; X est un halogène ou un groupe hydrocarbyle ayant de 1 à 10 atomes de carbone; et n est la valence du métal M moins 2.

4. Procédé selon la revendication 4 où le catalyseur de métallocène comprend du Cp₂TiCl₂ où Cp est un groupe cyclopentadiényle substitué ou non substitué.

5. Procédé selon l'une quelconque des revendications précédentes où le co-monomère comprend du 1-hexène.

6. Procédé selon l'une quelconque des revendications précédentes où les procédés d'homopolymérisation et de copolymérisation sont mis en oeuvre à une température de 60 à 110°C, sous une pression absolue de 1 à 100 bar, et l'homopolymérisation dans le premier réacteur est mise en oeuvre à une température plus élevée que la copolymérisation dans le second réacteur.

7. Procédé selon l'une quelconque des revendications précédentes où dans le premier réacteur, le monomère d'éthylène de préférence comprend de 0,1 à 3% en poids basé sur le poids total du monomère d'éthylène dans un diluant inerte et l'hydrogène comprend de 0,1 à 2 moles % calculé sur la même base.

8. Procédé selon l'une quelconque des revendications précédentes où la fraction de polyéthylène à faible poids moléculaire produite dans le premier réacteur comprend de 30 à 70% en poids du polyéthylène total produit dans les premier et second réacteurs raccordés en série.

9. Procédé selon l'une quelconque des revendications précédentes où dans le second réacteur le monomère d'éthylène comprend de 0,1 à 2% en poids, et le poids du co-monomère comprend de 1 à 3% en poids, chacun basé sur le poids total du monomère et du co-monomère dans un diluant inerte.
